# EUROPEAN PATENT APPLICATION

(11) **EP 3 001 351 A1**
(43) Date of publication of application: **30.03.2016**
(21) Application number: 15794041.2
(22) Date of filing: 13.02.2015
(51) Int. Cl.: G06K 9/00

(54) **USER IDENTITY AUTHENTICATION METHOD, TERMINAL AND SERVICE TERMINAL**

(30) Priority: 16.06.2014 CN 201410268505; 02.12.2014 CN 201410723599
(71) Applicant: Huawei Technologies Co. Ltd., Shenzhen, Guangdong 518129 (CN)
(72) Inventor: FANG, Chengfang, Shenzhen Guangdong 518129 (CN); CHU, Chengkang, Shenzhen Guangdong 518129 (CN)
(74) Representative: Kreuz, Georg Maria
(86) International application number: PCT/CN2015/073042
(87) International publication number: WO 2015/192670

(57) **Abstract**

Embodiments of the present invention provide a user identity authenticating method, a terminal, and a server. The method includes: determining, by a terminal according to a preset first-biological-feature processing instruction set, whether a currently-entered first user biological feature matches a second user biological feature, to obtain a first result, where the first-biological-feature processing instruction set is configured by a server for the terminal, and the second user biological feature is a biological feature that is registered on the server in advance by the terminal; determining, by the terminal, whether the first result is correct; and if the first result is correct, sending, by the terminal, the first result to the server, so that the server determines, according to the first result, whether the first user biological feature is authenticated. The method provided in the embodiments of the present invention not only enhances security when the server performs user identity authenticating, but also prevents the second user biological feature from being leaked to a non-secure area, thereby ensuring user privacy.

## Description

### TECHNICAL FIELD

Embodiments of the present invention relate to communications technologies, and in particular, to a user identity authenticating method, a terminal, and a server.

### BACKGROUND

Nowadays, an intelligent terminal is being increasingly popularized, and one important reason is that a large amount of application software is available for a user to download, and can supplement functions of a terminal. However, this also brings about an increasingly serious problem of terminal security, and various types of malware may pose a great threat to a terminal. For example, in terms of the most sensitive mobile payment, a password entered by a user may be stolen by using malware and a payment amount may also be tampered with, which is hard to be prevented simply by using software. Therefore, by using a hardware switching isolation architecture in a TrustZone (TrustZone), a security mode and a normal mode of software are completely isolated on a monitor of the Trustzone by using hardware, and are switched only by using the monitor of the Trustzone. In the security mode, only the most sensitive key part (for example, program code related to payment) runs, to reduce a trusted computing base as much as possible. Specifically, a program part that requires high security protection, for example, an interface in which a user enters a password or confirms a payment, runs in the security mode. When needing to use these interfaces, an application program (for example, a payment application) sends an invocation request to switch to the security mode. After a related payment action is completely executed, an operation result is sent back to the original program in the normal mode. Many hardware resources are used exclusively when operations are performed in the security mode. Therefore, it can be ensured that these key operations are not attacked or stolen by using malware.

Although a traditional password authentication manner inherits an architecture in which a security mode is isolated from a normal mode, there is a high risk of password leakage, and security is still not high. A biological feature authentication manner is a trend of terminal authentication at present. In the prior art, in terms of remote fingerprint authentication, generally, a fingerprint of a user is stored in a secure storage area of a terminal. When an identity of the user needs to be authenticated (for example, when payment is required for online shopping), a fingerprint of the user is entered to the terminal, and the terminal compares the fingerprint of the user with the fingerprint in the secure storage area, and finally sends a comparison result to a server (for example, the Alipay platform).

However, in the prior art, a server depends on a comparison result of a terminal excessively. If the terminal is attacked by using malware, the malware may send a comparison result "already paid" to the server in replacement of the terminal, but actually no payment is made yet, so that such "identity impersonation" causes a great risk for the server in terms of payment. In addition, if the server chooses to authenticate a fingerprint by itself to avoid a risk caused by identity impersonation, the terminal needs to send fingerprint information of a user to the server, and the server makes a comparison by itself, but this may cause leakage of user privacy.

### SUMMARY

Embodiments of the present invention provide a user identity authenticating method, a terminal, and a server, which are used to resolve technical problems of identity impersonation and leakage of user privacy that are caused when a terminal is attacked by using malware during a fingerprint authentication process in the prior art.

According to a first aspect, an embodiment of the present invention provides a user identity authenticating method, including:
determining, by a terminal according to a preset first-biological-feature processing instruction set, whether a currently-entered first user biological feature matches a second user biological feature, to obtain a first result, where the first-biological-feature processing instruction set is configured by a server for the terminal, and the second user biological feature is a biological feature that is registered on the server in advance by the terminal;
determining, by the terminal, whether the first result is correct, where the determining, by the terminal, whether the first result is correct specifically includes the following: when the terminal determines that the first user biological feature matches the second user biological feature and the first result does not carry the second user biological feature, it indicates that the first result is correct; and
if the first result is correct, sending, by the terminal, the first result to the server, so that the server determines, according to the first result, whether the first user biological feature is authenticated.

With reference to the first aspect, in a first possible implementation manner of the first aspect, the determining, by a terminal according to a preset first-biological-feature processing instruction set, whether a currently-entered first user biological feature matches a second user biological feature, to obtain a first result, specifically includes:
receiving, by the terminal, a biological feature authentication request sent by the server, where the biological feature authentication request includes challenge text that is randomly generated by the server;
acquiring, by the terminal, a first user private key according to the first user biological feature, prestored second-user-private-key ciphertext, and a prestored second-user-biological-feature secure sketch, where the second-user-private-key ciphertext is an encrypted second user private key; and
performing, by the terminal, signature processing on the challenge text according to the first user private key, to obtain a first signature.

With reference to the first possible implementation manner of the first aspect, in a second possible implementation manner of the first aspect, the determining, by the terminal, whether the first result is correct specifically includes:
determining, by the terminal according to a preset second user public key, whether the first signature is correct; and
if the first signature is correct, sending, by the terminal, the first signature and the second user public key to the server, so that the server determines, according to the second user public key and the first signature, whether the first user biological feature is authenticated.

With reference to the first possible implementation manner of the first aspect, in a third possible implementation manner of the first aspect, the acquiring, by the terminal, a first user private key according to the currently-entered first user biological feature, prestored second-user-private-key ciphertext, and a prestored second-user-biological-feature secure sketch, specifically includes:
acquiring, by the terminal, first-biological-feature code according to the second-user-biological-feature secure sketch and the first user biological feature; and
decrypting, by the terminal, the second-user-private-key ciphertext according to a hash value of the first-biological-feature code, to obtain the first user private key.

With reference to the second possible implementation manner of the first aspect, in a fourth possible implementation manner of the first aspect, the determining, by the terminal according to a preset second user public key, whether the first signature is correct specifically includes:
determining, by the terminal according to the second user public key, whether the first signature is the same as a third signature, where the third signature is obtained by the terminal by performing signature processing on the challenge text according to the second user private key.

With reference to any one of the first aspect to the fourth possible implementation manner of the first aspect, in a fifth possible implementation manner of the first aspect, before the determining, by a terminal according to a preset first-biological-feature processing instruction set, whether a currently-entered first user biological feature matches a second user biological feature, to obtain a first result, the method further includes:
registering, by the terminal, the second user biological feature on the server according to a preset second-biological-feature processing instruction set and the second user biological feature, where the second-biological-feature processing instruction set is configured by the server for the terminal.

With reference to the fifth possible implementation manner of the first aspect, in a sixth possible implementation manner of the first aspect, the registering, by the terminal, the second user biological feature on the server according to a preset second-biological-feature processing instruction set and the second user biological feature includes:
generating, by the terminal, a user public-private key pair, where the user public-private key pair includes the second user private key and the second user public key;
receiving, by the terminal, the second user biological feature entered by a user;
encrypting, by the terminal, the second user private key according to a hash value of the second user biological feature, to acquire the second-user-private-key ciphertext and the second-user-biological-feature secure sketch; and
saving, by the terminal, the second-user-private-key ciphertext and the second-user-biological-feature secure sketch.

With reference to the sixth possible implementation manner of the first aspect, in a seventh possible implementation manner of the first aspect, before the generating, by the terminal, a user public-private key pair, the method further includes:
sending, by the terminal, a biological feature registration request to the server, where the biological feature registration request includes a user identifier ID and a terminal ID;
receiving, by the terminal, apparatus private key ciphertext and an apparatus public key that are sent by the server, where the apparatus private key ciphertext is an encrypted apparatus private key; and
decrypting, by the terminal, the apparatus private key ciphertext according to a user account password entered by the user, to acquire the apparatus private key.

With reference to the seventh possible implementation manner of the first aspect, in an eighth possible implementation manner of the first aspect, after the saving, by the terminal, the second-user-private-key ciphertext and the second-user-biological-feature secure sketch, the method further includes:
performing, by the terminal, signature processing on the second user public key and the user ID according to the apparatus private key, to obtain a second signature; and
determining, by the terminal according to the apparatus public key, whether the second signature is correct; where
if the second signature is correct, the terminal sends the second signature to the server, so that the server determines, according to the apparatus public key and the second signature, whether the second user biological feature is registered successfully.

According to a second aspect, an embodiment of the present invention provides a user identity authenticating method, including:
configuring, by a server, a first-biological-feature processing instruction set for a terminal in advance, so that the terminal determines, according to the first-biological-feature processing instruction set, whether a first user biological feature that is currently entered at the terminal matches a second user biological feature, and obtains a first result, where the second user biological feature is a biological feature that is registered on the server in advance by the terminal;
receiving, by the server, the first result sent by the terminal; and
determining, by the server according to the first result, whether the first user biological feature is authenticated.

With reference to the second aspect, in a first possible implementation manner of the second aspect, before the receiving, by the server, the first result sent by the terminal, the method further includes:
sending, by the server to the terminal, a biological feature authentication request that carries challenge text, so that after acquiring a first user private key according to the first user biological feature, and second-user-private-key ciphertext and a second-user-biological-feature secure sketch that are prestored on the terminal, the terminal performs signature processing on the challenge text according to the first user private key, to obtain a first signature, where the second-user-private-key ciphertext is an encrypted second user private key.

With reference to the first possible implementation manner of the second aspect, in a second possible implementation manner of the second aspect, the receiving, by the server, the first result sent by the terminal specifically includes:
receiving, by the server, the first signature and a second user public key that are sent by the terminal; and
the determining, by the server according to the first result, whether the first user biological feature is authenticated specifically includes:
   determining, by the server according to the second user public key and the first signature, whether the first user biological feature is authenticated.

With reference to the second possible implementation manner of the second aspect, in a third possible implementation manner of the second aspect, before the configuring, by a server, a first-biological-feature processing instruction set for a terminal in advance, the method further includes:
configuring, by the server, a second-biological-feature processing instruction set for the terminal;
receiving, by the server, a biological feature registration request sent by the terminal, where the biological feature registration request includes a user identifier ID and a terminal ID;
sending, by the server, apparatus private key ciphertext and an apparatus public key to the terminal, so that after acquiring an apparatus private key by decrypting the apparatus private key ciphertext according to a user account password entered by a user, the terminal performs signature processing on the second user public key and the user ID according to the apparatus private key, to obtain a second signature;
receiving, by the server, the second signature sent by the terminal; and
determining, by the server according to the apparatus public key and the second signature, whether the second user biological feature is registered successfully.

With reference to the third possible implementation manner of the second aspect, in a fourth possible implementation manner of the second aspect, the sending, by the server, apparatus private key ciphertext and an apparatus public key to the terminal specifically includes:
generating, by the server, an apparatus public-private key pair, where the apparatus public-private key pair includes the apparatus public key and the apparatus private key;
encrypting, by the server, the apparatus private key according to a hash value of the user account password, to generate the apparatus private key ciphertext; and
sending, by the server, the apparatus private key ciphertext and the apparatus public key to the terminal.

With reference to the second possible implementation manner of the second aspect, in a fifth possible implementation manner of the second aspect, the determining, by the server according to the second user public key and the first signature, whether the first user biological feature is authenticated specifically includes:
determining, by the server according to the second user public key, whether the first signature is the same as a third signature, where the third signature is obtained by the terminal by performing signature processing on the challenge text according to the second user private key.

According to a third aspect, an embodiment of the present invention provides a terminal, including:
an acquiring module, configured to determine, according to a preset first-biological-feature processing instruction set, whether a currently-entered first user biological feature matches a second user biological feature, to obtain a first result, where the first-biological-feature processing instruction set is configured by a server for the terminal, and the second user biological feature is a biological feature that is registered on the server in advance by the terminal;
a judgment module, configured to determine whether the first result is correct, where that the terminal determines whether the first result is correct includes the following: when the terminal determines that the first user biological feature matches the second user biological feature and that the first result does not carry the second user biological feature, it indicates that the first result is correct; and
a sending module, configured to: when the judgment module determines that the first result is correct, send the first result to the server, so that the server determines, according to the first result, whether the first user biological feature is authenticated.

With reference to the third aspect, in a first possible implementation manner of the third aspect, the acquiring module includes:
a first receiving unit, configured to receive a biological feature authentication request sent by the server, where the biological feature authentication request includes challenge text that is randomly generated by the server;
a first acquiring unit, configured to acquire a first user private key according to the first user biological feature, prestored second-user-private-key ciphertext, and a prestored second-user-biological-feature secure sketch, where the second-user-private-key ciphertext is an encrypted second user private key; and
a second acquiring unit, configured to perform signature processing on the challenge text according to the first user private key, to obtain a first signature.

With reference to the first possible implementation manner of the third aspect, in a second possible implementation manner of the third aspect, the judgment module is specifically configured to determine, according to a preset second user public key, whether the first signature is correct; and
the sending module is specifically configured to: when the judgment module determines that the first signature is correct, send the first signature and the second user public key to the server, so that the server determines, according to the second user public key and the first signature, whether the first user biological feature is authenticated.

With reference to the first possible implementation manner of the third aspect, in a third possible implementation manner of the third aspect, the first acquiring unit is specifically configured to: acquire first-biological-feature code according to the second-user-biological-feature secure sketch and the first user biological feature, and decrypt the second-user-private-key ciphertext according to a hash value of the first-biological-feature code, to obtain the first user private key.

With reference to the second possible implementation manner of the third aspect, in a fourth possible implementation manner of the third aspect, the judgment module is specifically configured to determine, according to the second user public key, whether the first signature is the same as a third signature, where the third signature is obtained by the terminal by performing signature processing on the challenge text according to the second user private key.

With reference to any one of the third aspect to the fourth possible implementation manner of the third aspect, in a fifth possible implementation manner of the third aspect, the terminal further includes:
a registration module, configured to: before the acquiring module determines, according to the preset first-biological-feature processing instruction set, whether the currently-entered first user biological feature matches the second user biological feature, to obtain the first result, register the second user biological feature on the server according to a preset second-biological-feature processing instruction set and the second user biological feature, where the second-biological-feature processing instruction set is configured by the server for the terminal.

With reference to the fifth possible implementation manner of the third aspect, in a sixth possible implementation manner of the third aspect, the registration module includes:
a generating unit, configured to generate a user public-private key pair, where the user public-private key pair includes the second user private key and the second user public key;
a second receiving unit, configured to receive the second user biological feature entered by a user;
a third acquiring unit, configured to encrypt the second user private key according to a hash value of the second user biological feature, to acquire the second-user-private-key ciphertext and the second-user-biological-feature secure sketch; and
a saving unit, configured to save the second-user-private-key ciphertext and the second-user-biological-feature secure sketch.

With reference to the sixth possible implementation manner of the third aspect, in a seventh possible implementation manner of the third aspect, the registration module further includes:
a sending unit, configured to: before the generating unit generates the user public-private key pair, send a biological feature registration request to the server, where the biological feature registration request includes a user identifier ID and a terminal ID;
a third receiving unit, configured to receive apparatus private key ciphertext and an apparatus public key that are sent by the server, where the apparatus private key ciphertext is an encrypted apparatus private key; and
a decryption unit, configured to decrypt the apparatus private key ciphertext according to a user account password entered by the user, to acquire the apparatus private key.

With reference to the seventh possible implementation manner of the third aspect, in an eighth possible implementation manner of the third aspect, the registration module further includes:
a fourth acquiring unit, configured to: after the saving unit saves the second-user-private-key ciphertext and the second-user-biological-feature secure sketch, perform signature processing on the second user public key and the user ID according to the apparatus private key, to obtain a second signature; and
a judgment unit, configured to determine, according to the apparatus public key, whether the second signature is correct; where
the sending unit is further configured to: when the judgment unit determines that the second signature is correct, send the second signature to the server, so that the server determines, according to the apparatus public key and the second signature, whether the second user biological feature is registered successfully.

According to a fourth aspect, an embodiment of the present invention provides a server, including:
a first configuring module, configured to configure a first-biological-feature processing instruction set for a terminal in advance, so that the terminal determines, according to the first-biological-feature processing instruction set, whether a first user biological feature that is currently entered at the terminal matches a second user biological feature, and obtains a first result, where the second user biological feature is a biological feature that is registered on the server in advance by the terminal;
a first receiving module, configured to receive the first result sent by the terminal; and
a first determining module, configured to determine, according to the first result, whether the first user biological feature is authenticated.

With reference to the fourth aspect, in a first possible implementation manner of the fourth aspect, the server further includes:
a first sending module, configured to: before the first receiving module receives the first result sent by the terminal, send, to the terminal, a biological feature authentication request that carries challenge text, so that after acquiring a first user private key according to the first user biological feature, and second-user-private-key ciphertext and a second-user-biological-feature secure sketch that are prestored on the terminal, the terminal performs signature processing on the challenge text according to the first user private key, to obtain a first signature, where the second-user-private-key ciphertext is an encrypted second user private key.

With reference to the first possible implementation manner of the fourth aspect, in a second possible implementation manner of the fourth aspect, the first receiving module is specifically configured to receive the first signature and a second user public key that are sent by the terminal; and
the first determining module is specifically configured to determine, according to the second user public key and the first signature, whether the first user biological feature is authenticated.

With reference to the second possible implementation manner of the fourth aspect, in a third possible implementation manner of the fourth aspect, the server further includes:
a second configuring module, configured to: before the first configuring module configures the first-biological-feature processing instruction set for the terminal, configure a second-biological-feature processing instruction set for the terminal;
a second receiving module, configured to receive a biological feature registration request sent by the terminal, where the biological feature registration request includes a user identifier ID and a terminal ID;
a second sending module, configured to send apparatus private key ciphertext and an apparatus public key to the terminal, so that after acquiring an apparatus private key by decrypting the apparatus private key ciphertext according to a user account password entered by a user, the terminal performs signature processing on the second user public key and the user ID according to the apparatus private key, to obtain a second signature;
a third receiving module, configured to receive the second signature sent by the terminal; and
a second determining module, configured to determine, according to the apparatus public key and the second signature, whether the second user biological feature is registered successfully.

With reference to the third possible implementation manner of the fourth aspect, in a fourth possible implementation manner of the fourth aspect, the second sending module includes:
a first generating unit, configured to generate an apparatus public-private key pair, where the apparatus public-private key pair includes the apparatus public key and the apparatus private key;
a second generating unit, configured to encrypt the apparatus private key according to a hash value of the user account password, to generate the apparatus private key ciphertext; and
a sending unit, configured to send the apparatus private key ciphertext and the apparatus public key to the terminal.

With reference to the second possible implementation manner of the fourth aspect, in a fifth possible implementation manner of the fourth aspect, the first determining module is specifically configured to determine, according to the second user public key, whether the first signature is the same as a third signature, where the third signature is obtained by the terminal by performing signature processing on the challenge text according to the second user private key.

According to the user identity authenticating method, the terminal, and the server provided in the embodiments of the present invention, a terminal determines, according to a first-biological-feature processing instruction set that is preset inside the terminal by a server, whether a currently-entered first user biological feature matches a second user biological feature, to obtain a first result; then, the terminal determines whether the first result is correct, and sends the first result to the server when the first result is correct, so that the server determines, according to the first result, whether the first user biological feature is authenticated. In the method provided in the embodiments of the present invention, the first-biological-feature processing instruction set is configured by the server for the terminal, and therefore, the server does not totally depend on a comparison result of the terminal, thereby enhancing security when the server performs user identity authenticating. In addition, the terminal may also monitor the foregoing acquired first result to prevent the second user biological feature from being leaked to a non-secure area, thereby ensuring user privacy.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic flowchart of Embodiment 1 of a user identity authenticating method according to the present invention;
FIG. 2 is a schematic flowchart of Embodiment 2 of a user identity authenticating method according to the present invention;
FIG. 3 is a schematic flowchart of Embodiment 3 of a user identity authenticating method according to the present invention;
FIG. 4 is a schematic flowchart of Embodiment 4 of a user identity authenticating method according to the present invention;
FIG. 5 is a schematic flowchart of Embodiment 5 of a user identity authenticating method according to the present invention;
FIG. 6 is a schematic flowchart of Embodiment 6 of a user identity authenticating method according to the present invention;
FIG. 7A and FIG. 7B are a signaling flowchart of Embodiment 7 of a user identity authenticating method according to the present invention;
FIG. 8 is a schematic structural diagram of Embodiment 1 of a terminal according to the present invention;
FIG. 9 is a schematic structural diagram of Embodiment 2 of a terminal according to the present invention;
FIG. 10 is a schematic structural diagram of Embodiment 3 of a terminal according to the present invention;
FIG. 11 is a schematic structural diagram of Embodiment 4 of a terminal according to the present invention;
FIG. 12 is a schematic structural diagram of Embodiment 1 of a server according to the present invention;
FIG. 13 is a schematic structural diagram of Embodiment 2 of a server according to the present invention;
FIG. 14 is a schematic structural diagram of Embodiment 3 of a server according to the present invention; and
FIG. 15 is a schematic structural diagram of Embodiment 4 of a server according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

A terminal involved in the embodiments of the present invention may be a user equipment, or may be a wireless terminal, or may be a wired terminal. The wireless terminal may refer to a device providing voice and/or data connectivity for a user, a handheld device having a wireless connection function, or another processing device connected to a wireless modem. The wireless terminal may communicate with one or more core networks through a radio access network (such as RAN, Radio Access Network). The wireless terminal may be a mobile terminal, such as a mobile phone (or referred to as a "cellular" phone) or a computer with a mobile terminal, for example, may be a portable, pocket-sized, handheld, computer built-in, or in-vehicle mobile apparatus, which exchanges voice and/or data with the radio access network. For example, the wireless terminal may be a device such as a personal communications service (PCS, Personal Communication Service) phone, a cordless telephone set, a Session Initiation Protocol (SIP) phone, a wireless local loop (WLL, Wireless Local Loop) station, or a personal digital assistant (PDA, Personal Digital Assistant).

In addition, the terminal involved in the present invention can further provide a Trusted Execution Environment (TEE) in a secure world, to ensure that the following method embodiments can be executed in a secure environment.

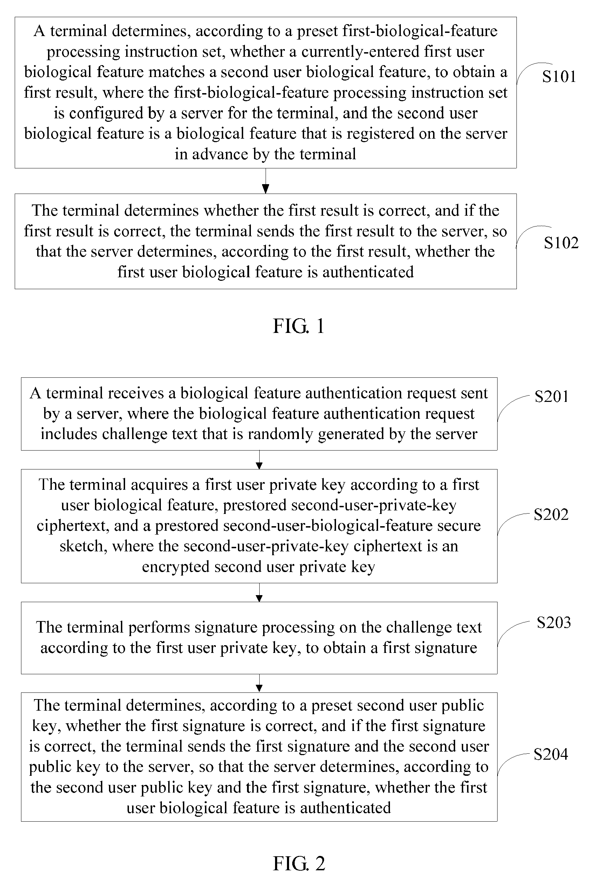

FIG. 1 is a schematic flowchart of Embodiment 1 of a user identity authenticating method according to the present invention. As shown in FIG. 1, the method includes the following steps:
S101: A terminal determines, according to a preset first-biological-feature processing instruction set, whether a currently-entered first user biological feature matches a second user biological feature, to obtain a first result, where the first-biological-feature processing instruction set is configured by a server for the terminal, and the second user biological feature is a biological feature that is registered on the server in advance by the terminal.

Specifically, before authenticating an identity of a user, the terminal may first register a biological feature of the user on the server. That is, in S101, the terminal registers the second user biological feature on the server in advance. Optionally, the terminal may register the second user biological feature on the server by executing a biological feature registration instruction that is preset on the terminal by the server, so that the server learns the biological feature of the user for the convenience of later user identity authenticating. The server herein is a server platform providing a terminal-related service. For example, when the user shops online by using a terminal, the server herein may be the Alipay platform. When the user needs to make a mobile payment, the identity of the user needs to be authenticated by using the terminal and the server.

When the identity of the user needs to be authenticated, the user may enter the first user biological feature at the terminal. It should be noted that the first user biological feature herein and the second user biological feature need to be of a same type. That is, if the second user biological feature registered on the server by the user is a fingerprint, the entered first user biological feature herein should also be a fingerprint instead of another biological feature such as a pupil. After receiving the first user biological feature that is currently entered by the user, the terminal executes the first-biological-feature processing instruction set that is preset inside the terminal by the server, to determine whether the currently-entered first user biological feature matches the second user biological feature, and obtain the first result. The foregoing first-biological-feature processing instruction set is mainly used by the terminal to authenticate the identity of the user.

S102: The terminal determines whether the first result is correct, and if the first result is correct, the terminal sends the first result to the server, so that the server determines, according to the first result, whether the first user biological feature is authenticated.

Specifically, the terminal determines whether the foregoing first result is correct. Optionally, when the terminal determines that the first user biological feature matches the second user biological feature and the first result does not carry the second user biological feature, it indicates that the first result is correct. Optionally, when the terminal determines that the first user biological feature matches the second user biological feature but the first result carries the second user biological feature, it indicates that the first result is incorrect. Optionally, when the terminal determines that the first user biological feature does not match the second user biological feature, the first result is incorrect no matter whether the first result carries the second user biological feature or not.

When the terminal determines that the first result is correct, the terminal sends the first result to the server, and the server determines, according to the first result, whether the foregoing first user biological feature is authenticated. Optionally, the server may determine, by using its own determining mechanism, whether the first result is obtained by the terminal by executing the preset first-biological-feature processing instruction set, and determine whether the first result matches a correct result predicted by the server. If the first result matches the correct result predicted by the server, it indicates that the user is authenticated.

During a traditional user identity authenticating process (for example, fingerprint authentication), there are two extremes. First, a server totally depends on a fingerprint comparison result of a terminal, that is, fingerprint information of the user always exists on a mobile phone. Therefore, leakage of user privacy is not caused, but there is a risk when a payment is made on the server (for example, fingerprint authentication being attacked by using malware, or identity impersonation). Second, to ensure security when a payment is made on the server and application flexibility in fingerprint authentication, the terminal sends the fingerprint information of the user to the server, and the server makes a comparison by itself. Therefore, a risk of identity impersonation or the like is avoided, but leakage of user privacy may be caused.

However, in this application, the first-biological-feature processing instruction set that is used when the terminal authenticates the identity of the user is configured by the server for the terminal. Therefore, the first result obtained by the terminal by executing the first-biological-feature processing instruction set is trusted to the server, that is, the server does not totally depend on a comparison result of the terminal, thereby ensuring security when the server performs identity authentication. In addition, the terminal may determine whether the first result is correct, that is, determine whether the first result carries the previously-registered second user biological feature of the user, to ensure that the terminal does not send the registered second user biological feature of the user, that is, ensure that the second user biological feature always exists on the terminal, thereby preventing leakage of user privacy.

According to the user identity authenticating method provided in this embodiment of the present invention, a terminal determines, according to a first-biological-feature processing instruction set that is preset inside the terminal by a server, whether a currently-entered first user biological feature matches a second user biological feature, to obtain a first result; then, the terminal determines whether the first result is correct, and sends the first result to the server when the first result is correct, so that the server determines, according to the first result, whether the first user biological feature is authenticated. In the method provided in this embodiment of the present invention, the first-biological-feature processing instruction set is configured by the server for the terminal, and therefore, the server does not totally depend on a comparison result of the terminal, thereby enhancing security when the server performs user identity authenticating. In addition, the terminal may also monitor the foregoing acquired first result to prevent the second user biological feature from being leaked to a non-secure area, thereby ensuring user privacy.

FIG. 2 is a schematic flowchart of Embodiment 2 of a user identity authenticating method according to the present invention. This embodiment relates to a specific process during which the terminal acquires the first result by executing the preset first-biological-feature processing instruction set and the terminal determines whether the first result is correct, that is, a specific process during which the terminal authenticates the identity of the user. As shown in FIG. 2,
S201: The terminal receives a biological feature authentication request sent by the server, where the biological feature authentication request includes challenge text that is randomly generated by the server.

Specifically, when the fingerprint of the user needs to be authenticated (for example, when the user needs to make a payment), the server may send the biological feature authentication request to the terminal, where the biological feature authentication request may include the challenge text that is randomly generated by the server, and may further include a user identifier (Identifier, hereinafter referred to as ID) and a terminal ID. The user ID herein may be a user account that is registered on a payment website by the user.

S202: The terminal acquires a first user private key according to the first user biological feature, prestored second-user-private-key ciphertext, and a prestored second-user-biological-feature secure sketch, where the second-user-private-key ciphertext is an encrypted second user private key.

Specifically, the user enters the first user biological feature at the terminal. After acquiring the first user biological feature, the terminal obtains first-biological-feature code (actually any biological feature exists in a terminal in a form of code) through calculation with reference to the prestored second-user-biological-feature secure sketch. Then, the terminal decrypts the prestored second-user-private-key ciphertext according to a hash value of the first-biological-feature code, to obtain the first user private key corresponding to the first user biological feature.

S203: The terminal performs signature processing on the challenge text according to the first user private key, to obtain a first signature.

It should be noted that, that the terminal performs signature processing on the challenge text according to the first user private key herein actually means that the terminal calculates the challenge text by using the first user private key, to generate the first signature.

S204: The terminal determines, according to a preset second user public key, whether the first signature is correct, and if the first signature is correct, the terminal sends the first signature and the second user public key to the server, so that the server determines, according to the second user public key and the first signature, whether the first user biological feature is authenticated.

Specifically, the terminal determines, according to the preset second user public key, whether the foregoing first signature is correct. Optionally, the terminal determines, according to the preset second user public key, whether the first signature is the same as a third signature, where the third signature is obtained by the terminal by performing signature processing on the challenge text in advance according to the second user private key, that is, the third signature is obtained by the terminal by performing signature processing on the challenge text by using a correct second user private key that is corresponding to the registered second user biological feature. However, the first user private key herein is corresponding to the first user biological feature entered by the user, and correctness of the first user private key cannot be ensured (if the entered first user biological feature is correct, that is, the first user biological feature entered by the user is consistent with the registered second user biological feature, this first user private key is a correct private key; however, if the entered first user biological feature itself is an incorrect biological feature, for example, a biological feature entered by another user or another biological feature entered by the same user, the first user private key herein is incorrect). Consequently, correctness of the first signature that is obtained by performing signature processing on same challenge text by using the first user private key cannot be ensured either. Therefore, the terminal may determine, by using the second user public key corresponding to the second user private key, whether the first signature is the same as the third signature, to determine whether the first signature is correct. Certainly, the third signature does not carry the second user biological feature.

If the terminal determines that the first signature is the same as the third signature, it indicates that the first signature is correct. That is, the first signature does not carry the second user biological feature. Then, the terminal sends the first signature and the second user public key to the server. After receiving both the first signature and the second user public key, the server also determines, according to the second user public key, whether the first signature is obtained after signature processing is performed on the challenge text by using the second user private key. If the first signature is obtained after signature processing is performed on the challenge text by using the second user private key, the server determines that the first signature is correct, that is, the server determines that the first user biological feature that is currently entered by the user is correct.

According to the user identity authenticating method provided in this embodiment of the present invention, after executing a first-biological-feature processing instruction set that is preset inside a terminal in advance by a server, that is, acquiring a first user private key according to a first user biological feature entered by a user, prestored second-user-private-key ciphertext, and a prestored second-user-biological-feature secure sketch, and acquiring a first signature by performing, according to the first user private key, signature processing on challenge text sent by the server, the terminal determines whether the first signature is accurate, and sends the first signature to the server after the first signature is correct. In the method provided in this embodiment of the present invention, the first-biological-feature processing instruction set is configured by the server for the terminal, and therefore, the server does not totally depend on a comparison result of the terminal, thereby enhancing security when the server performs user identity authenticating and application flexibility (that is, the server may properly adjust a comparison threshold that is set when the terminal compares biological features by executing the first-biological-feature processing instruction set). In addition, the terminal may also monitor the foregoing acquired first result to prevent the second user biological feature from being leaked to a non-secure area, thereby ensuring user privacy. In addition, in the method provided in the present invention, the terminal does not need to store a complete biological feature of the user, and therefore does not need extra secure storage hardware, so that costs of hardware design are reduced.

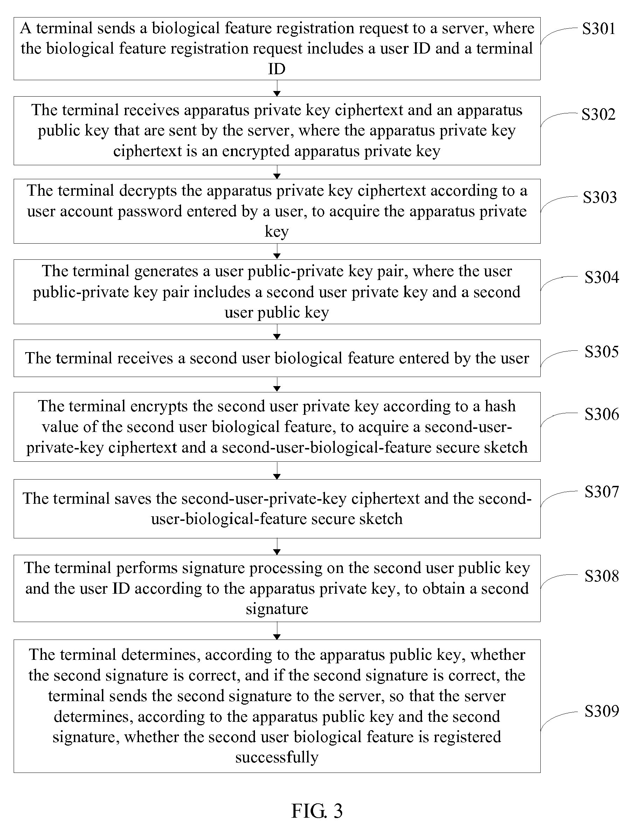

FIG. 3 is a schematic flowchart of Embodiment 3 of a user identity authenticating method according to the present invention. This embodiment relates to a specific process during which the terminal registers the second user biological feature on the server according to a preset second-biological-feature processing instruction set and the second user biological feature, before the identity of the user is authenticated (that is, before the foregoing S101). The second-biological-feature processing instruction set is configured by the server for the terminal, and the second-biological-feature processing instruction set is used by the terminal to register the second user biological feature on the server. As shown in FIG. 3, before S101, the method further includes:
S301: The terminal sends a biological feature registration request to the server, where the biological feature registration request includes a user ID and a terminal ID.

Specifically, before the terminal registers the second user biological feature of the user, the server may first authenticate the user in another manner, such as a user account password, a password, a Short Message Service message, or voice. That is, the user first needs to log in to the server, and registers a biological feature only after the identity of the user is confirmed for the first time. That is, the terminal sends, to the server, the biological feature registration request that carries the user ID and the terminal ID, to register the second user biological feature on the server.

S302: The terminal receives apparatus private key ciphertext and an apparatus public key that are sent by the server, where the apparatus private key ciphertext is an encrypted apparatus private key.

Specifically, after receiving the biological feature registration request sent by the terminal, the server generates an apparatus public-private key pair, where the apparatus public-private key pair includes one apparatus private key and one apparatus public key. Then, after generating the apparatus private key ciphertext by encrypting the apparatus private key by using a hash value of the user account password or the password that is entered by the user (the server itself knows the user account password or the password that is corresponding to the user account or the hash value of the user account password or the password), the server sends the apparatus private key ciphertext and the apparatus public key to the terminal.

S303: The terminal decrypts the apparatus private key ciphertext according to a user account password entered by the user, to acquire the apparatus private key.

S304: The terminal generates a user public-private key pair, where the user public-private key pair includes the second user private key and the second user public key.

S305: The terminal receives the second user biological feature entered by the user.

S306: The terminal encrypts the second user private key according to a hash value of the second user biological feature, to acquire the second-user-private-key ciphertext and the second-user-biological-feature secure sketch.

S307: The terminal saves the second-user-private-key ciphertext and the second-user-biological-feature secure sketch.

Specifically, the terminal saves the second-user-private-key ciphertext and the second-user-biological-feature secure sketch for the convenience of later user identity authenticating. Reference may be made to the foregoing embodiment shown in FIG. 2, and details are not described herein again.

S308: The terminal performs signature processing on the second user public key and the user ID according to the apparatus private key, to obtain a second signature.

Specifically, the terminal performs signature processing on the second user public key and the user ID according to the previously-acquired apparatus private key, that is, performs signature calculation (reference may be made to the prior art) on the second user public key and the user ID, to acquire the second signature.

S309: The terminal determines, according to the apparatus public key, whether the second signature is correct, and if the second signature is correct, the terminal sends the second signature to the server, so that the server determines, according to the apparatus public key and the second signature, whether the second user biological feature is registered successfully.

Specifically, the apparatus public key is corresponding to the apparatus private key, and therefore, whether the foregoing second signature is obtained by the terminal by performing signature processing on the second user public key and the user ID according to the apparatus private key may be accurately determined by using the apparatus public key. In addition, whether the second signature includes the second user biological feature is determined, and if the second signature does not include the second user biological feature, it indicates that the second signature is correct.

Then, the terminal sends the second signature to the server, where the second signature is obtained by the terminal by executing the second-biological-feature processing instruction set that is preset inside the terminal by the server (that is, the foregoing S301-S308 are a process during which the terminal executes the second-biological-feature processing instruction set). Therefore, the server knows that the second signature is obtained by the terminal by executing the second-biological-feature processing instruction set that is configured by the server for the terminal. After receiving the second signature, the server also performs determining on the second signature by using the apparatus public key, that is, determines whether the foregoing second signature is obtained by the terminal by performing signature processing on the second user public key and the user ID according to the apparatus private key. If the foregoing second signature is obtained by the terminal by performing signature processing on the second user public key and the user ID according to the apparatus private key, it indicates that the second signature is correct, and the second user biological feature of the user is registered successfully.

According to the user identity authenticating method provided in this embodiment of the present invention, a terminal registers a second user biological feature of a user on a server by executing a second-biological-feature processing instruction set that is preset inside the terminal in advance by the server. Then, after executing a first-biological-feature processing instruction set, that is, acquiring a first user private key according to a first user biological feature entered by the user, prestored second-user-private-key ciphertext, and a prestored second-user-biological-feature secure sketch, and acquiring a first signature by performing, according to the first user private key, signature processing on challenge text sent by the server, the terminal determines whether the first signature is accurate, and sends the first signature to the server after the first signature is correct. In the method provided in this embodiment of the present invention, the first-biological-feature processing instruction set is configured by the server for the terminal, and therefore, the server does not totally depend on a comparison result of the terminal, thereby enhancing security when the server performs user identity authenticating and application flexibility (that is, the server may properly adjust a comparison threshold that is set when the terminal compares biological features by executing the first-biological-feature processing instruction set). In addition, the terminal may also monitor the foregoing acquired first result to prevent the second user biological feature from being leaked to a non-secure area, thereby ensuring user privacy. In addition, in the method provided in the present invention, the terminal does not need to store a complete biological feature of the user, and therefore does not need extra secure storage hardware, so that costs of hardware design are reduced.

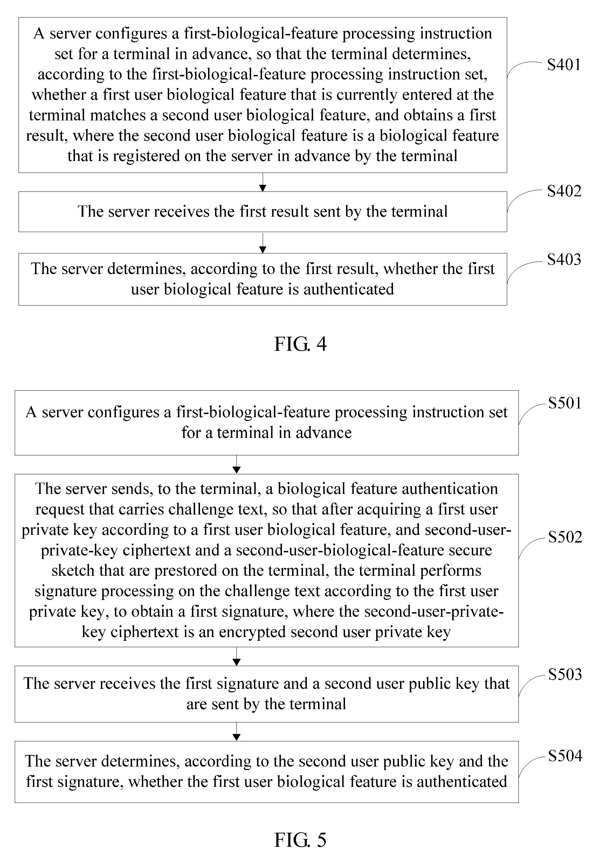

FIG. 4 is a schematic flowchart of Embodiment 4 of a user identity authenticating method according to the present invention. As shown in FIG. 4, the method includes:
S401: A server configures a first-biological-feature processing instruction set for a terminal in advance, so that the terminal determines, according to the first-biological-feature processing instruction set, whether a first user biological feature that is currently entered at the terminal matches a second user biological feature, and obtains a first result, where the second user biological feature is a biological feature that is registered on the server in advance by the terminal.

Specifically, the server configures the first-biological-feature processing instruction set for the terminal in advance, so that the terminal can authenticate an identity of a user by executing the first-biological-feature processing instruction set. Optionally, before authenticating the identity of the user, the terminal may first register a biological feature of the user on the server, that is, the terminal registers the second user biological feature on the server in advance. Optionally, the terminal may register the second user biological feature on the server by executing a biological feature registration instruction that is preset on the terminal by the server, so that the server learns the biological feature of the user for the convenience of later user identity authenticating. The server herein is a server platform providing a terminal-related service. For example, when the user shops online by using a terminal, the server herein may be the Alipay platform. When the user needs to make a mobile payment, the identity of the user needs to be authenticated by using the terminal and the server.

When the identity of the user needs to be authenticated, the user may enter the first user biological feature at the terminal. It should be noted that the first user biological feature herein and the second user biological feature need to be of a same type. That is, if the second user biological feature registered on the server by the user is a fingerprint, the entered first user biological feature herein should also be a fingerprint instead of another biological feature such as a pupil. After receiving the first user biological feature that is currently entered by the user, the terminal executes the first-biological-feature processing instruction set that is preset inside the terminal by the server, to determine whether the currently-entered first user biological feature matches the second user biological feature, and obtain the first result. The foregoing first-biological-feature processing instruction set is mainly used by the terminal to authenticate the identity of the user.

Further, after obtaining the first result, the terminal may determine whether the first result is correct. Optionally, when the terminal determines that the first user biological feature matches the second user biological feature and the first result does not carry the second user biological feature, it indicates that the first result is correct;. Optionally, when the terminal determines that the first user biological feature matches the second user biological feature but the first result carries the second user biological feature, it indicates that the first result is incorrect. Optionally, when the terminal determines that the first user biological feature does not match the second user biological feature, the first result is incorrect no matter whether the first result carries the second user biological feature or not.

When the terminal determines that the first result is correct, the terminal sends the first result to the server.

S402: The server receives the first result sent by the terminal.

S403: The server determines, according to the first result, whether the first user biological feature is authenticated.

Optionally, the server determines, according to the first result, whether the first user biological feature is authenticated. Optionally, the server may determine, by using its own determining mechanism, whether the first result is obtained by the terminal by executing the preset first-biological-feature processing instruction set, and determine whether the first result matches a correct result predicted by the server. If the first result matches the correct result predicted by the server, it indicates that the user is authenticated.

During a traditional user identity authenticating process (for example, fingerprint authentication), there are two extremes. First, a server totally depends on a fingerprint comparison result of a terminal, that is, fingerprint information of the user always exists on a mobile phone. Therefore, leakage of user privacy is not caused, but there is a risk when a payment is made on the server (for example, fingerprint authentication being attacked by using malware, or identity impersonation). Second, to ensure security when a payment is made on the server and application flexibility in fingerprint authentication, the terminal sends the fingerprint information of the user to the server, and the server makes a comparison by itself. Therefore, a risk of identity impersonation or the like is avoided, but leakage of user privacy may be caused.

However, in this application, the first-biological-feature processing instruction set that is used when the terminal authenticates the identity of the user is configured by the server for the terminal. Therefore, the first result obtained by the terminal by executing the first-biological-feature processing instruction set is trusted to the server, that is, the server does not totally depend on a comparison result of the terminal, thereby ensuring security when the server performs identity authentication. In addition, the terminal may determine whether the first result is correct, that is, determine whether the first result carries the previously-registered second user biological feature of the user, to ensure that the terminal does not send the registered second user biological feature of the user, that is, ensure that the second user biological feature always exists on the terminal, thereby preventing leakage of user privacy.

According to the user identity authenticating method provided in this embodiment of the present invention, a server configures a first-biological-feature processing instruction set for a terminal in advance. The terminal determines, according to the first-biological-feature processing instruction set that is preset inside the terminal by the server, whether a currently-entered first user biological feature matches a second user biological feature, to obtain a first result. Then, the terminal determines whether the first result is correct, and sends the first result to the server when the first result is correct, so that the server determines, according to the first result, whether the first user biological feature is authenticated. In the method provided in this embodiment of the present invention, the first-biological-feature processing instruction set is configured by the server for the terminal, and therefore, the server does not totally depend on a comparison result of the terminal, thereby enhancing security when the server performs user identity authenticating. In addition, the terminal may also monitor the foregoing acquired first result to prevent the second user biological feature from being leaked to a non-secure area, thereby ensuring user privacy.

FIG. 5 is a schematic flowchart of Embodiment 5 of a user identity authenticating method according to the present invention. This embodiment relates to a specific process during which the server determines whether the first user biological feature is correct. As shown in FIG. 5, the method includes:
S501: The server configures the first-biological-feature processing instruction set for the terminal in advance.

Specifically, the server configures the first-biological-feature processing instruction set for the terminal in advance, so that the terminal can authenticate the identity of the user by executing the first-biological-feature processing instruction set. Optionally, before authenticating the identity of the user, the terminal may first register a biological feature of the user on the server, that is, the terminal registers the second user biological feature on the server in advance. Optionally, the terminal may register the second user biological feature on the server by executing a biological feature registration instruction that is preset on the terminal by the server, so that the server learns the biological feature of the user for the convenience of later user identity authenticating. The server herein is a server platform providing a terminal-related service. For example, when the user shops online by using a terminal, the server herein may be the Alipay platform. When the user needs to make a mobile payment, the identity of the user needs to be authenticated by using the terminal and the server.

S502: The server sends, to the terminal, a biological feature authentication request that carries challenge text, so that after acquiring a first user private key according to the first user biological feature, and second-user-private-key ciphertext and a second-user-biological-feature secure sketch that are prestored on the terminal, the terminal performs signature processing on the challenge text according to the first user private key, to obtain a first signature, where the second-user-private-key ciphertext is an encrypted second user private key.

Specifically, after the terminal receives the biological feature authentication request sent by the server, the user enters the first user biological feature at the terminal. It should be noted that the first user biological feature herein and the second user biological feature need to be of a same type. That is, if the second user biological feature registered on the server by the user is a fingerprint, the entered first user biological feature herein should also be a fingerprint instead of another biological feature such as a pupil.

After receiving the first user biological feature that is currently entered by the user, the terminal executes the first-biological-feature processing instruction set that is preset inside the terminal by the server, that is, the terminal obtains first-biological-feature code (actually any biological feature exists in a terminal in a form of code) through calculation with reference to the prestored second-user-biological-feature secure sketch. Then, the terminal decrypts the prestored second-user-private-key ciphertext according to a hash value of the first-biological-feature code, to obtain the first user private key corresponding to the first user biological feature. Then, the terminal performs signature processing on the challenge text in the biological feature authentication request according to the first user private key (which actually means calculates the challenge text by using the first user private key), to generate the first signature.

Further, the terminal determines, according to a preset second user public key, whether the foregoing first signature is correct. Optionally, the terminal determines, according to the preset second user public key, whether the first signature is the same as a third signature, where the third signature is obtained by the terminal by performing signature processing on the challenge text in advance according to the second user private key, that is, the third signature is obtained by the terminal by performing signature processing on the challenge text by using a correct second user private key that is corresponding to the registered second user biological feature. However, the first user private key herein is corresponding to the first user biological feature entered by the user, and correctness of the first user private key cannot be ensured (if the entered first user biological feature is correct, that is, the first user biological feature entered by the user is consistent with the registered second user biological feature, this first user private key is a correct private key; however, if the entered first user biological feature itself is an incorrect biological feature, the first user private key herein is incorrect). Consequently, correctness of the first signature that is obtained by performing signature processing on same challenge text by using the first user private key cannot be ensured either. Therefore, the terminal may determine, by using the second user public key corresponding to the second user private key, whether the first signature is the same as the third signature, to determine whether the first signature is correct. Certainly, the third signature does not carry the second user biological feature.

If the terminal determines that the first signature is the same as the third signature, it indicates that the first signature is correct, that is, the first signature does not carry the second user biological feature. Then, the terminal sends the first signature and the second user public key to the server.

S503: The server receives the first signature and the second user public key that are sent by the terminal.

S504: The server determines, according to the second user public key and the first signature, whether the first user biological feature is authenticated.

Specifically, after receiving the second user public key and the first signature, the server also determines, according to the second user public key, whether the first signature is obtained after signature processing is performed on the challenge text by using the second user private key. That is, the server also needs to determine whether the first signature is the same as the third signature. If the first signature is the same as the third signature, the server determines that the first signature is correct, that is, the server determines that the first user biological feature that is currently entered by the user is correct, the identity of the user is authenticated.

According to the user identity authenticating method provided in this embodiment of the present invention, a server configures a first-biological-feature processing instruction set for a terminal in advance. After executing the first-biological-feature processing instruction set, that is, acquiring a first user private key according to a first user biological feature entered by the user, prestored second-user-private-key ciphertext, and a prestored second-user-biological-feature secure sketch, and acquiring a first signature by performing, according to the first user private key, signature processing on challenge text sent by the server, the terminal determines whether the first signature is accurate, and therefore sends the first signature to the server after the first signature is correct, so that the server determines, according to the second user public key and the first signature, whether the first user biological feature is authenticated. In the method provided in this embodiment of the present invention, the first-biological-feature processing instruction set is configured by the server for the terminal, and therefore, the server does not totally depend on a comparison result of the terminal, thereby enhancing security when the server performs user identity authenticating and application flexibility (that is, the server may properly adjust a comparison threshold that is set when the terminal compares biological features by executing the first-biological-feature processing instruction set). In addition, the terminal may also monitor the foregoing acquired first result to prevent the second user biological feature from being leaked to a non-secure area, thereby ensuring user privacy. In addition, in the method provided in the present invention, the terminal does not need to store a complete biological feature of the user, and therefore does not need extra secure storage hardware, so that costs of hardware design are reduced.

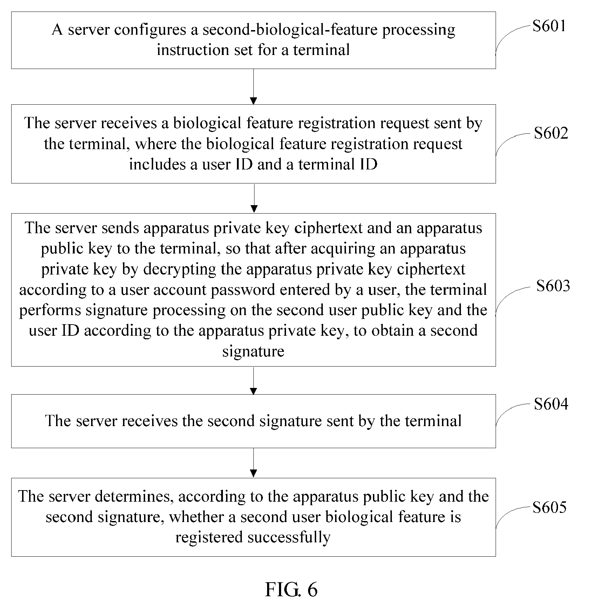

FIG. 6 is a schematic flowchart of Embodiment 6 of a user identity authenticating method according to the present invention. This embodiment relates to a specific process during which the terminal registers the second user biological feature on the server according to a second-biological-feature processing instruction set configured by the server and the second user biological feature, before the identity of the user is authenticated (that is, before the foregoing S501). As shown in FIG. 6, before S501, the method further includes:
S601: The server configures the second-biological-feature processing instruction set for the terminal.

Specifically, the server configures the second-biological-feature processing instruction set for the terminal in advance, so that the terminal can register the second user biological feature on the server according to the second-biological-feature processing instruction set. It should be noted that before the terminal registers the second user biological feature of the user, the server may first authenticate the user in another manner, such as a user account password, a password, a Short Message Service message, or voice, that is, the user first needs to log in to the server, and registers a biological feature only after the identity of the user is confirmed for the first time.

S602: The server receives a biological feature registration request sent by the terminal, where the biological feature registration request includes a user ID and a terminal ID.

S603: The server sends apparatus private key ciphertext and an apparatus public key to the terminal, so that after acquiring an apparatus private key by decrypting the apparatus private key ciphertext according to a user account password entered by the user, the terminal performs signature processing on the second user public key and the user ID according to the apparatus private key, to obtain a second signature.

Specifically, after receiving the biological feature registration request that is sent by the terminal and carries the user ID and the terminal ID, the server generates an apparatus public-private key pair, where the apparatus public-private key pair includes one apparatus private key and one apparatus public key. Then, after generating the apparatus private key ciphertext by encrypting the apparatus private key by using a hash value of the user account password or the password that is entered by the user (the server itself knows the user account password or the password that is corresponding to the user account or the hash value of the user account password or the password), the server sends the apparatus private key ciphertext and the apparatus public key to the terminal.

Then, the terminal decrypts the foregoing apparatus private key ciphertext according to the user account password entered by the user, to acquire the apparatus private key. In addition, the terminal further generates a user public-private key pair, where the user public-private key pair includes the second user private key and the second user public key. Further, after receiving the second user biological feature entered by the user, the terminal acquires the second-user-private-key ciphertext and the second-user-biological-feature secure sketch by encrypting the second user private key according to a hash value of the second user biological feature, and saves the second-user-private-key ciphertext and the second-user-biological-feature secure sketch, so that in the foregoing S502, the terminal acquires the first user private key according to the second-user-private-key ciphertext and the second-user-biological-feature secure sketch that are saved and with reference to the entered first user biological feature, and the terminal acquires the first signature according to the first user private key.

Further, the terminal performs signature processing on the second user public key and the user ID according to the previously-acquired apparatus private key, that is, performs signature calculation (reference may be made to the prior art) on the second user public key and the user ID, to acquire the second signature. Subsequently, the terminal determines, according to the previously-acquired apparatus private key, whether the second signature is correct, that is, determines whether the foregoing second signature is obtained by the terminal by performing signature processing on the second user public key and the user ID according to the apparatus private key. The apparatus public key is corresponding to the apparatus private key, and therefore, whether the foregoing second signature is obtained by the terminal by performing signature processing on the second user public key and the user ID according to the apparatus private key may be accurately determined by using the apparatus public key. In addition, whether the second signature includes the second user biological feature is determined, and if the second signature does not include the second user biological feature, it indicates that the second signature is correct.

S604: The server receives the second signature sent by the terminal.

S605: The server determines, according to the apparatus public key and the second signature, whether the second user biological feature is registered successfully.

Specifically, the terminal sends the second signature to the server, where the second signature is obtained by the terminal by executing the second-biological-feature processing instruction set that is preset inside the terminal by the server. Therefore, the server knows that the second signature is obtained by the terminal by executing the second-biological-feature processing instruction set that is configured by the server for the terminal. After receiving the second signature, the server also performs determining on the second signature by using the apparatus public key, that is, determines whether the foregoing second signature is obtained by the terminal by performing signature processing on the second user public key and the user ID according to the apparatus private key. If the foregoing second signature is obtained by the terminal by performing signature processing on the second user public key and the user ID according to the apparatus private key, it indicates that the second signature is correct, and the second user biological feature of the user is registered successfully.

According to the user identity authenticating method provided in this embodiment of the present invention, a server configures a second-biological-feature processing instruction set for a terminal in advance, so that the terminal can register a second user biological feature of a user on the server according to the second-biological-feature processing instruction set. Then, after the terminal determines, according to a first-biological-feature processing instruction set that is preset inside the terminal by the server, whether a currently-entered first user biological feature matches the second user biological feature, to obtain a first result, the terminal determines whether the first result is correct, and sends the first result to the server when the first result is correct, so that the server determines, according to the first result, whether the first user biological feature is authenticated. In the method provided in this embodiment of the present invention, the first-biological-feature processing instruction set is configured by the server for the terminal, and therefore, the server does not totally depend on a comparison result of the terminal, thereby enhancing security when the server performs user identity authenticating and application flexibility (that is, the server may properly adjust a comparison threshold that is set when the terminal compares biological features by executing the first-biological-feature processing instruction set). In addition, the terminal may also monitor the foregoing acquired first result to prevent the second user biological feature from being leaked to a non-secure area, thereby ensuring user privacy. In addition, in the method provided in the present invention, the terminal does not need to store a complete biological feature of the user, and therefore does not need extra secure storage hardware, so that costs of hardware design are reduced.

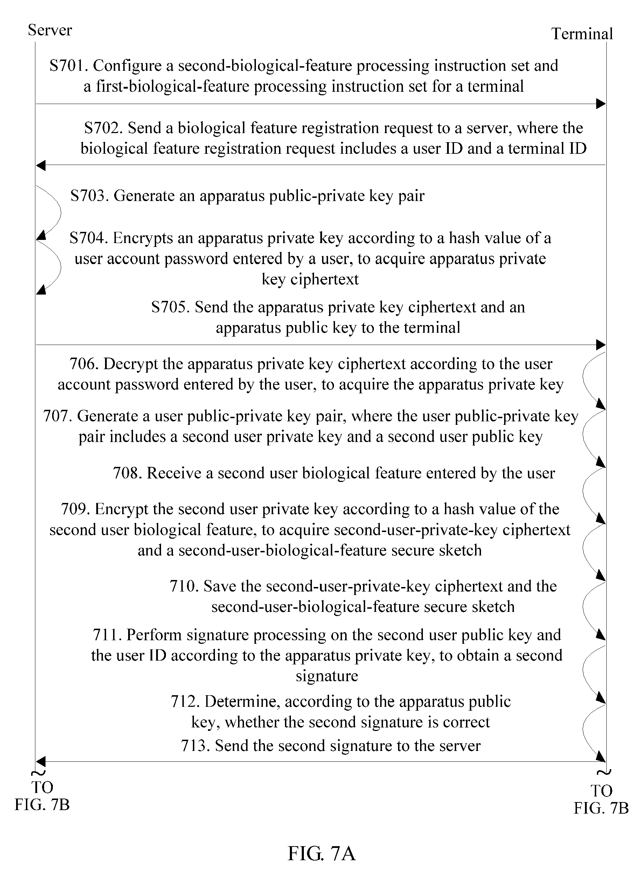

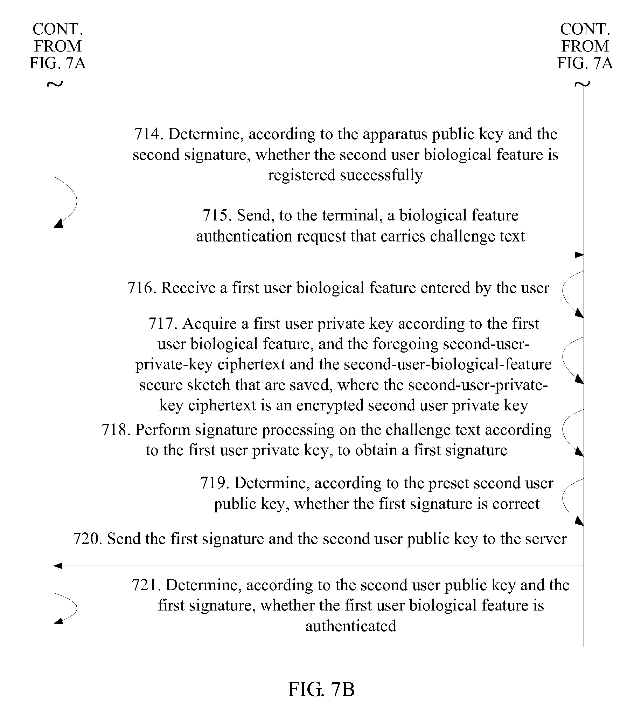

FIG. 7A and FIG. 7B are a signaling flowchart of Embodiment 7 of a user identity authenticating method according to the present invention. This embodiment relates to a specific process during which a terminal and a server cooperate with each other to authenticate an identity of a user. The method includes:
S701: The server configures a second-biological-feature processing instruction set and a first-biological-feature processing instruction set for the terminal.

The first-biological-feature processing instruction set is used to register a biological feature of the user, and the second-biological-feature processing instruction set is used to authenticate a biological feature of the user. These two biological feature processing instruction sets may be integrated in a same module inside the terminal, or may be located in different modules, which is not limited in this embodiment of the present invention.

S702: The terminal sends a biological feature registration request to the server, where the biological feature registration request includes a user ID and a terminal ID.

Specifically, before the terminal registers a second user biological feature of the user, the server may first authenticate the user in another manner, such as a user account password, a password, a Short Message Service message, or voice, that is, the user first needs to log in to the server, and registers a biological feature only after the identity of the user is confirmed for the first time. That is, the terminal sends, to the server, the biological feature registration request that carries the user ID and the terminal ID, to register the second user biological feature on the server.

S703: The server generates an apparatus public-private key pair.

S704: The terminal encrypts an apparatus private key according to a hash value of a user account password entered by the user, to acquire apparatus private key ciphertext.

Specifically, the server itself can learn the user account password or the hash value of the user account password. In addition, optionally, the terminal may further encrypt the apparatus private key according to the hash value of the user account password, to obtain the apparatus private key ciphertext.

S705: The server sends the apparatus private key ciphertext and the apparatus public key to the terminal.

S706: The terminal decrypts the apparatus private key ciphertext according to the user account password entered by the user, to acquire the apparatus private key.

S707: The terminal generates a user public-private key pair, where the user public-private key pair includes a second user private key and a second user public key.

S708: The terminal receives a second user biological feature entered by the user.

S709: The terminal encrypts the second user private key according to a hash value of the second user biological feature, to acquire second-user-private-key ciphertext and a second-user-biological-feature secure sketch.

S710: The terminal saves the second-user-private-key ciphertext and the second-user-biological-feature secure sketch.

S711: The terminal performs signature processing on the second user public key and the user ID according to the apparatus private key, to obtain a second signature.

Specifically, the terminal performs signature processing on the second user public key and the user ID according to the previously-acquired apparatus private key, that is, performs signature calculation (reference may be made to the prior art) on the second user public key and the user ID, to acquire the second signature.

S712: The terminal determines, according to the apparatus public key, whether the second signature is correct; if the second signature is correct, perform S713, and if the second signature is incorrect, end the procedure.

Specifically, the terminal determines, according to the previously-acquired apparatus private key, whether the second signature is correct, that is, determines whether the foregoing second signature is obtained by the terminal by performing signature processing on the second user public key and the user ID according to the apparatus private key. The apparatus public key is corresponding to the apparatus private key, and therefore, whether the foregoing second signature is obtained by the terminal by performing signature processing on the second user public key and the user ID according to the apparatus private key may be accurately determined by using the apparatus public key. In addition, whether the second signature includes the second user biological feature is determined, and if the second signature does not include the second user biological feature, it indicates that the second signature is correct.

S713: The terminal sends the second signature to the server.

S714: The server determines, according to the apparatus public key and the second signature, whether the second user biological feature is registered successfully; if the second user biological feature is registered successfully, the server determines that the second user biological feature is registered successfully, and performs S715; if the second user biological feature is not registered successfully, end the procedure.

Specifically, after receiving the second signature, the server also needs to perform determining on the second signature by using the apparatus public key, that is, determine whether the foregoing second signature is obtained by the terminal by performing signature processing on the second user public key and the user ID according to the apparatus private key. If the foregoing second signature is obtained by the terminal by performing signature processing on the second user public key and the user ID according to the apparatus private key, it indicates that the second signature is correct, and the second user biological feature of the user is registered successfully.

S715: The server sends, to the terminal, a biological feature authentication request that carries challenge text.

S716: The terminal receives a first user biological feature entered by the user.

Specifically, after the terminal receives the biological feature authentication request sent by the server, the user enters the first user biological feature at the terminal. It should be noted that the first user biological feature herein and the second user biological feature need to be of a same type. That is, if the second user biological feature registered on the server by the user is a fingerprint, the entered first user biological feature herein should also be a fingerprint instead of another biological feature such as a pupil.

S717: The terminal acquires a first user private key according to the first user biological feature, and the foregoing second-user-private-key ciphertext and the second-user-biological-feature secure sketch that are saved, where the second-user-private-key ciphertext is an encrypted second user private key.

Specifically, after receiving the first user biological feature that is currently entered by the user, the terminal executes the first-biological-feature processing instruction set that is preset inside the terminal by the server, that is, the terminal obtains first-biological-feature code (actually any biological feature exists in a terminal in a form of code) through calculation with reference to the prestored second-user-biological-feature secure sketch. Then, the terminal decrypts the prestored second-user-private-key ciphertext according to a hash value of the first-biological-feature code, to obtain the first user private key corresponding to the first user biological feature.

S718: The terminal performs signature processing on the challenge text according to the first user private key, to obtain a first signature.

S719: The terminal determines, according to the preset second user public key, whether the first signature is correct; if the first signature is correct, perform S720; if the first signature is incorrect, end the procedure.

Specifically, the terminal determines, according to the preset second user public key, whether the foregoing first signature is correct. Optionally, the terminal determines, according to the preset second user public key, whether the first signature is the same as a third signature, where the third signature is obtained by the terminal by performing signature processing on the challenge text in advance according to the second user private key, that is, the third signature is obtained by the terminal by performing signature processing on the challenge text by using a correct second user private key that is corresponding to the registered second user biological feature. However, the first user private key herein is corresponding to the first user biological feature entered by the user, and correctness of the first user private key cannot be ensured (if the entered first user biological feature is correct, that is, the first user biological feature entered by the user is consistent with the registered second user biological feature, this first user private key is a correct private key; however, if the entered first user biological feature itself is an incorrect biological feature, the first user private key herein is incorrect). Consequently, correctness of the first signature that is obtained by performing signature processing on same challenge text by using the first user private key cannot be ensured either. Therefore, the terminal may determine, by using the second user public key corresponding to the second user private key, whether the first signature is the same as the third signature, to determine whether the first signature is correct. Certainly, the third signature does not carry the second user biological feature.

If the terminal determines that the first signature is the same as the third signature, it indicates that the first signature is correct. That is, the first signature does not carry the second user biological feature.

S720: The terminal sends the first signature and the second user public key to the server.

Specifically, if the terminal determines that the first signature is the same as the third signature, it indicates that the first signature is correct. That is, the first signature does not carry the second user biological feature. Then, the terminal sends the first signature and the second user public key to the server.

S721: The server determines, according to the second user public key and the first signature, whether the first user biological feature is authenticated.

Specifically, after receiving the second user public key and the first signature, the server also determines, according to the second user public key, whether the first signature is obtained after signature processing is performed on the challenge text by using the second user private key, that is, the server determines whether the first signature is the same as the third signature. If the first signature is the same as the third signature, the server determines that the first signature is correct, that is, the server determines that the first user biological feature that is currently entered by the user is correct, the identity of the user is authenticated.

According to the user identity authenticating method provided in this embodiment of the present invention, a server configures a second-biological-feature processing instruction set for a terminal in advance, so that the terminal can register a second user biological feature of a user on the server according to the second-biological-feature processing instruction set. Then, after the terminal determines, according to a first-biological-feature processing instruction set that is preset inside the terminal by the server, whether a currently-entered first user biological feature matches the second user biological feature, to obtain a first result, the terminal determines whether the first result is correct, and sends the first result to the server when the first result is correct, so that the server determines, according to the first result, whether the first user biological feature is authenticated. In the method provided in this embodiment of the present invention, the first-biological-feature processing instruction set is configured by the server for the terminal, and therefore, the server does not totally depend on a comparison result of the terminal, thereby enhancing security when the server performs user identity authenticating and application flexibility (that is, the server may properly adjust a comparison threshold that is set when the terminal compares biological features by executing the first-biological-feature processing instruction set). In addition, the terminal may also monitor the foregoing acquired first result to prevent the second user biological feature from being leaked to a non-secure area, thereby ensuring user privacy. In addition, in the method provided in the present invention, the terminal does not need to store a complete biological feature of the user, and therefore does not need extra secure storage hardware, so that costs of hardware design are reduced.

Persons of ordinary skill in the art may understand that all or some of the steps of the method embodiments may be implemented by a program instructing related hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

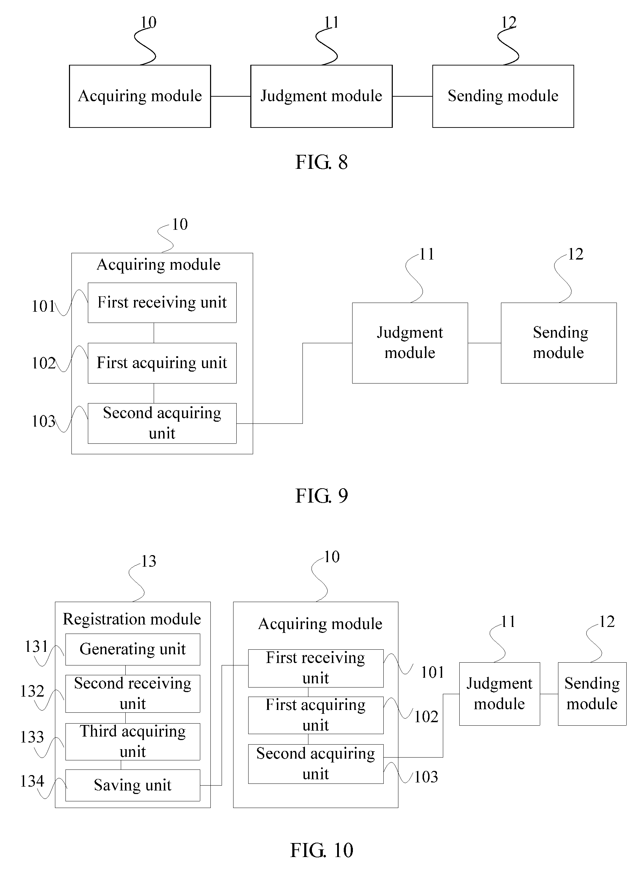

FIG. 8 is a schematic structural diagram of Embodiment 1 of a terminal according to the present invention. As shown in FIG. 8, the terminal includes: an acquiring module 10, a judgment module 11, and a sending module 12. The acquiring module 10 is configured to determine, according to a preset first-biological-feature processing instruction set, whether a currently-entered first user biological feature matches a second user biological feature, to obtain a first result, where the first-biological-feature processing instruction set is configured by a server for the terminal, and the second user biological feature is a biological feature that is registered on the server in advance by the terminal; the judgment module 11 is configured to determine whether the first result is correct; and the sending module 12 is configured to: when the judgment module 11 determines that the first result is correct, send the first result to the server, so that the server determines, according to the first result, whether the first user biological feature is authenticated.

The terminal provided in this embodiment of the present invention may execute the foregoing user identity authenticating method embodiments, implementation principles and technical effects of the terminal are similar and are not described herein again.

FIG. 9 is a schematic structural diagram of Embodiment 2 of a terminal according to the present invention. On the basis of the embodiment shown in FIG. 8, further, the foregoing acquiring module 10 specifically includes: a first receiving unit 101, a first acquiring unit 102, and a second acquiring unit 103. The first receiving unit 101 is configured to receive a biological feature authentication request sent by the server, where the biological feature authentication request includes challenge text that is randomly generated by the server; the first acquiring unit 102 is configured to acquire a first user private key according to the first user biological feature, prestored second-user-private-key ciphertext, and a prestored second-user-biological-feature secure sketch, where the second-user-private-key ciphertext is an encrypted second user private key; and the second acquiring unit 103 is configured to perform signature processing on the challenge text according to the first user private key, to obtain a first signature.

Further, the foregoing judgment module 11 is specifically configured to determine, according to a preset second user public key, whether the first signature is correct; and the foregoing sending module 12 is specifically configured to: when the judgment module 11 determines that the first signature is correct, send the first signature and the second user public key to the server, so that the server determines, according to the second user public key and the first signature, whether the first user biological feature is authenticated.

Still further, the foregoing first acquiring unit 102 is specifically configured to: acquire first-biological-feature code according to the second-user-biological-feature secure sketch and the first user biological feature, and decrypt the second-user-private-key ciphertext according to a hash value of the first-biological-feature code, to obtain the first user private key.

Yet further, the foregoing judgment module 11 is specifically configured to determine, according to the second user public key, whether the first signature is the same as a third signature, where the third signature is obtained by the terminal by performing signature processing on the challenge text according to the second user private key.

The terminal provided in this embodiment of the present invention may execute the foregoing user identity authenticating method embodiments, implementation principles and technical effects of the terminal are similar and are not described herein again.

FIG. 10 is a schematic structural diagram of Embodiment 3 of a terminal according to the present invention. On the basis of the foregoing embodiment shown in FIG. 9, further, the terminal further includes: a registration module 13, configured to: before the acquiring module 10 determines, according to the preset first-biological-feature processing instruction set, whether the currently-entered first user biological feature matches the second user biological feature, to obtain the first result, register the second user biological feature on the server according to a second-biological-feature processing instruction set and the second user biological feature, where the second-biological-feature processing instruction set is configured by the server for the terminal.

Further, the registration module 13 specifically includes: a generating unit 131, a second receiving unit 132, a third acquiring unit 133, and a saving unit 134. The generating unit 131 is configured to generate a user public-private key pair, where the user public-private key pair includes the second user private key and the second user public key; the second receiving unit 132 is configured to receive the second user biological feature entered by a user; the third acquiring unit 133 is configured to encrypt the second user private key according to a hash value of the second user biological feature, to acquire the second-user-private-key ciphertext and the second-user-biological-feature secure sketch; and the saving unit 134 is configured to save the second-user-private-key ciphertext and the second-user-biological-feature secure sketch.

The terminal provided in this embodiment of the present invention may execute the foregoing user identity authenticating method embodiments, implementation principles and technical effects of the terminal are similar and are not described herein again.

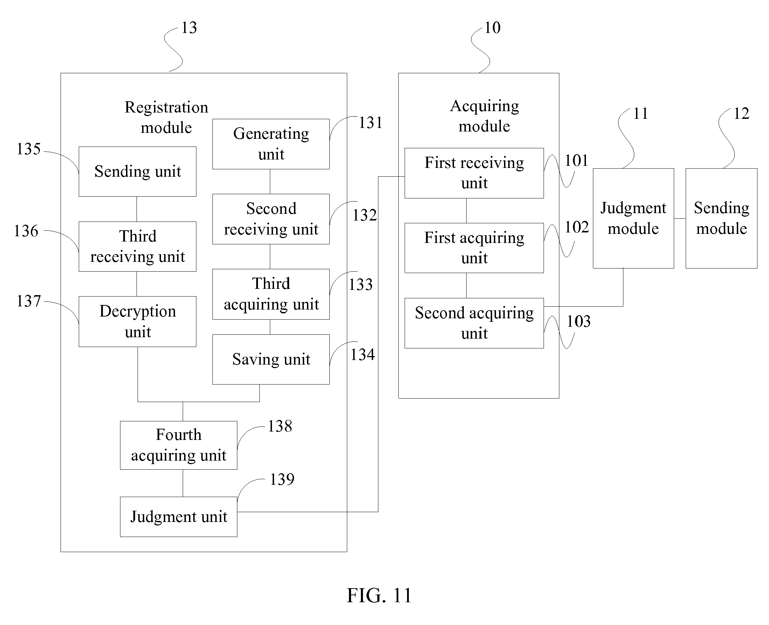

FIG. 11 is a schematic structural diagram of Embodiment 4 of a terminal according to the present invention. On the basis of the foregoing embodiment shown in FIG. 10, further, the foregoing registration module 13 further includes: a sending module 135, a third receiving unit 136, and a decryption unit 137. The sending unit 135 is configured to: before the generating unit 131 generates the user public-private key pair, send a biological feature registration request to the server, where the biological feature registration request includes a user identifier ID and a terminal ID; the third receiving unit 136 is configured to receive apparatus private key ciphertext and an apparatus public key that are sent by the server, where the apparatus private key ciphertext is an encrypted apparatus private key; and the decryption unit 137 is configured to decrypt the apparatus private key ciphertext according to a user account password entered by the user, to acquire the apparatus private key.

Further, the foregoing registration module 13 may include: a fourth acquiring unit 138 and a judgment unit 139. The fourth acquiring unit 138 is configured to: after the saving unit 134 saves the second-user-private-key ciphertext and the second-user-biological-feature secure sketch, perform signature processing on the second user public key and the user ID according to the apparatus private key, to obtain a second signature; and the judgment unit 139 is configured to determine, according to the apparatus public key, whether the second signature is correct; where the sending unit 135 is further configured to: when the judgment unit 139 determines that the second signature is correct, send the second signature to the server, so that the server determines, according to the apparatus public key and the second signature, whether the second user biological feature is registered successfully.

The terminal provided in this embodiment of the present invention may execute the foregoing user identity authenticating method embodiments, implementation principles and technical effects of the terminal are similar and are not described herein again.

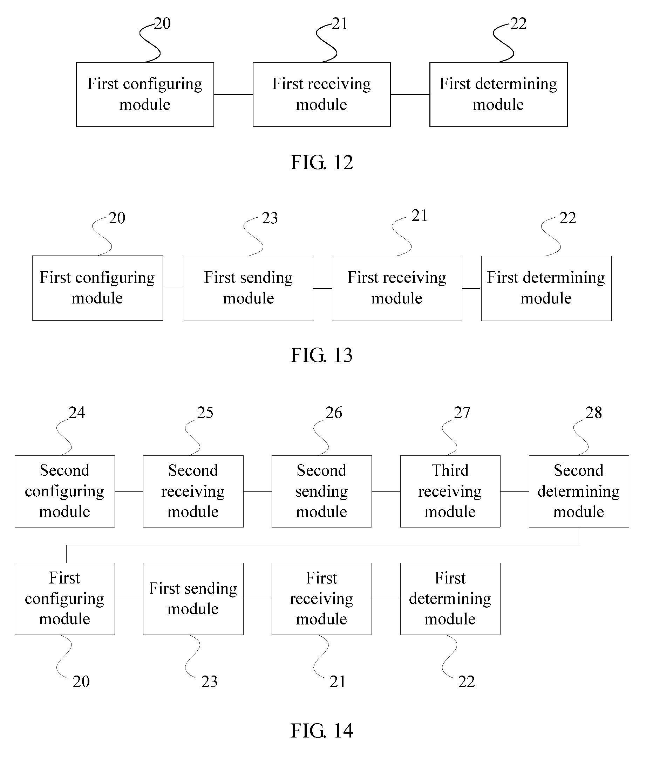

FIG. 12 is a schematic structural diagram of Embodiment 1 of a server according to the present invention. As shown in FIG. 12, the server includes: a first configuring module 20, a first receiving module 21, and a first determining module 22. The first configuring module 20 is configured to configure a first-biological-feature processing instruction set for a terminal in advance, so that the terminal determines, according to the first-biological-feature processing instruction set, whether a first user biological feature that is currently entered at the terminal matches a second user biological feature, and obtains a first result, where the second user biological feature is a biological feature that is registered on the server in advance by the terminal; the first receiving module 21 is configured to receive the first result sent by the terminal; and the first determining module 22 is configured to determine, according to the first result, whether the first user biological feature is authenticated.

The server provided in this embodiment of the present invention may execute the foregoing user identity authenticating method embodiments, implementation principles and technical effects of the server are similar and are not described herein again.

FIG. 13 is a schematic structural diagram of Embodiment 2 of a server according to the present invention. On the basis of the foregoing embodiment shown in FIG. 12, further, the server may further include: a first sending module 23, configured to: before the first receiving module 21 receives the first result sent by the terminal, send, to the terminal, a biological feature authentication request that carries challenge text, so that after acquiring a first user private key according to the first user biological feature, and second-user-private-key ciphertext and a second-user-biological-feature secure sketch that are prestored on the terminal, the terminal performs signature processing on the challenge text according to the first user private key, to obtain a first signature, where the second-user-private-key ciphertext is an encrypted second user private key.

Further, the foregoing first receiving module 21 is specifically configured to receive the first signature and a second user public key that are sent by the terminal; and the first determining module 22 is specifically configured to determine, according to the second user public key and the first signature, whether the first user biological feature is authenticated.

The server provided in this embodiment of the present invention may execute the foregoing user identity authenticating method embodiments, implementation principles and technical effects of the server are similar and are not described herein again.

FIG. 14 is a schematic structural diagram of Embodiment 3 of a server according to the present invention. On the basis of the foregoing embodiment shown in FIG. 13, further, the server may further include: a second configuring module 24, a second receiving module 25, a second sending module 26, a third receiving module 27, and a second determining module 28. The second configuring module 24 is configured to: before the first configuring module 20 configures the first-biological-feature processing instruction set for the terminal, configure a second-biological-feature processing instruction set for the terminal; the second receiving module 25 is configured to receive a biological feature registration request sent by the terminal, where the biological feature registration request includes a user identifier ID and a terminal ID; the second sending module 26 is configured to send apparatus private key ciphertext and an apparatus public key to the terminal, so that after acquiring an apparatus private key by decrypting the apparatus private key ciphertext according to a user account password entered by a user, the terminal performs signature processing on the second user public key and the user ID according to the apparatus private key, to obtain a second signature; the third receiving module 27 is configured to receive the second signature sent by the terminal; and the second determining module 28 is configured to determine, according to the apparatus public key and the second signature, whether the second user biological feature is registered successfully.

The server provided in this embodiment of the present invention may execute the foregoing user identity authenticating method embodiments, implementation principles and technical effects of the server are similar and are not described herein again.

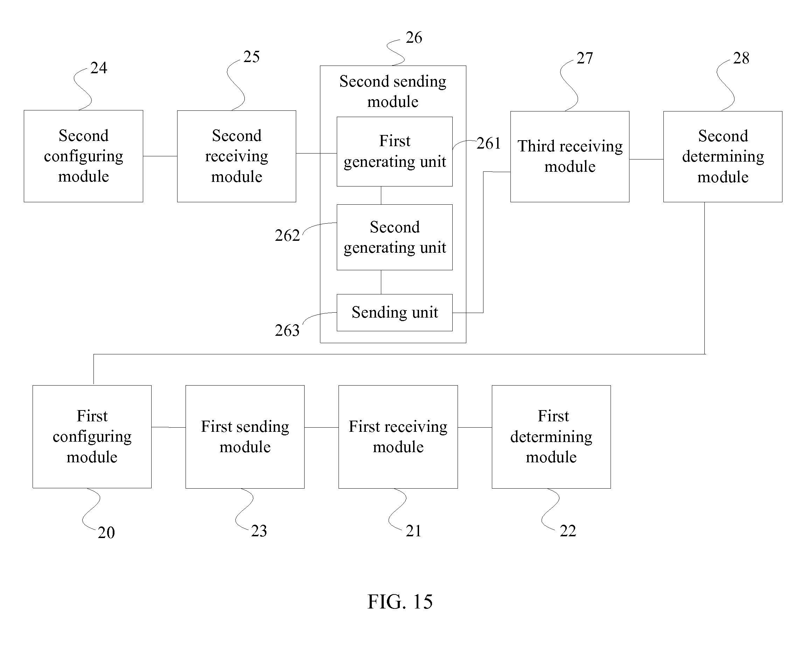

FIG. 15 is a schematic structural diagram of Embodiment 4 of a server according to the present invention. On the basis of the foregoing embodiment shown in FIG. 14, further, the foregoing second sending module 26 specifically includes: a first generating unit 261, a second generating unit 262, and a sending unit 263. The first generating unit 261 is configured to generate an apparatus public-private key pair, where the apparatus public-private key pair includes the apparatus public key and the apparatus private key; the second generating unit 262 is configured to encrypt the apparatus private key according to a hash value of the user account password, to generate the apparatus private key ciphertext; and the sending unit 263 is configured to send the apparatus private key ciphertext and the apparatus public key to the terminal.

Further, the foregoing first determining module 22 is specifically configured to determine, according to the second user public key, whether the first signature is the same as a third signature, where the third signature is obtained by the terminal by performing signature processing on the challenge text according to the second user private key.

The server provided in this embodiment of the present invention may execute the foregoing user authentication method embodiments, implementation principles and technical effects of the server are similar and are not described herein again.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A user identity authenticating method, comprising:
determining, by a terminal according to a preset first-biological-feature processing instruction set, whether a currently-entered first user biological feature matches a second user biological feature, to obtain a first result, wherein the first-biological-feature processing instruction set is configured by a server for the terminal, and the second user biological feature is a biological feature that is registered on the server in advance by the terminal;
determining, by the terminal, whether the first result is correct, wherein the determining, by the terminal, whether the first result is correct specifically comprises the following: when the terminal determines that the first user biological feature matches the second user biological feature and the first result does not carry the second user biological feature, it indicates that the first result is correct; and
sending, by the terminal, the first result to the server, if the first result is correct, so that the server determines, according to the first result, whether the first user biological feature is authenticated.

2. The method according to claim 1, wherein the determining, by a terminal according to a preset first-biological-feature processing instruction set, whether a currently-entered first user biological feature matches a second user biological feature, to obtain a first result, specifically comprises:
receiving, by the terminal, a biological feature authentication request sent by the server, wherein the biological feature authentication request comprises challenge text that is randomly generated by the server;
acquiring, by the terminal, a first user private key according to the first user biological feature, prestored second-user-private-key ciphertext, and a prestored second-user-biological-feature secure sketch, wherein the second-user-private-key ciphertext is an encrypted second user private key; and
performing, by the terminal, signature processing on the challenge text according to the first user private key, to obtain a first signature.

3. The method according to claim 2, wherein the determining, by the terminal, whether the first result is correct specifically comprises:
determining, by the terminal according to a preset second user public key, whether the first signature is correct; and
if the first signature is correct, sending, by the terminal, the first signature and the second user public key to the server, so that the server determines, according to the second user public key and the first signature, whether the first user biological feature is authenticated.

4. The method according to claim 2, wherein the acquiring, by the terminal, a first user private key according to the currently-entered first user biological feature, prestored second-user-private-key ciphertext, and a prestored second-user-biological-feature secure sketch specifically comprises:
acquiring, by the terminal, first-biological-feature code according to the second-user-biological-feature secure sketch and the first user biological feature; and
decrypting, by the terminal, the second-user-private-key ciphertext according to a hash value of the first-biological-feature code, to obtain the first user private key.

5. The method according to claim 3, wherein the determining, by the terminal according to a preset second user public key, whether the first signature is correct specifically comprises:
determining, by the terminal according to the second user public key, whether the first signature is the same as a third signature, wherein the third signature is obtained by the terminal by performing signature processing on the challenge text according to the second user private key.

6. The method according to any one of claims 1 to 5, wherein before the determining, by a terminal according to a preset first-biological-feature processing instruction set, whether a currently-entered first user biological feature matches a second user biological feature, to obtain a first result, the method further comprises:
registering, by the terminal, the second user biological feature on the server according to a preset second-biological-feature processing instruction set and the second user biological feature, wherein the second-biological-feature processing instruction set is configured by the server for the terminal.

7. The method according to claim 6, wherein the registering, by the terminal, the second user biological feature on the server according to a preset second-biological-feature processing instruction set and the second user biological feature comprises:
generating, by the terminal, a user public-private key pair, wherein the user public-private key pair comprises the second user private key and the second user public key;
receiving, by the terminal, the second user biological feature entered by a user;
encrypting, by the terminal, the second user private key according to a hash value of the second user biological feature, to acquire the second-user-private-key ciphertext and the second-user-biological-feature secure sketch; and
saving, by the terminal, the second-user-private-key ciphertext and the second-user-biological-feature secure sketch.

8. The method according to claim 7, wherein before the generating, by the terminal, a user public-private key pair, the method further comprises:
sending, by the terminal, a biological feature registration request to the server, wherein the biological feature registration request comprises a user identifier ID and a terminal ID;
receiving, by the terminal, apparatus private key ciphertext and an apparatus public key that are sent by the server, wherein the apparatus private key ciphertext is an encrypted apparatus private key; and
decrypting, by the terminal, the apparatus private key ciphertext according to a user account password entered by the user, to acquire the apparatus private key.

9. The method according to claim 8, wherein after the saving, by the terminal, the second-user-private-key ciphertext and the second-user-biological-feature secure sketch, the method further comprises:
performing, by the terminal, signature processing on the second user public key and the user ID according to the apparatus private key, to obtain a second signature; and
determining, by the terminal according to the apparatus public key, whether the second signature is correct; wherein
if the second signature is correct, the terminal sends the second signature to the server, so that the server determines, according to the apparatus public key and the second signature, whether the second user biological feature is registered successfully.

10. A user identity authenticating method, comprising:
configuring, by a server, a first-biological-feature processing instruction set for a terminal in advance, so that the terminal determines, according to the first-biological-feature processing instruction set, whether a first user biological feature that is currently entered at the terminal matches a second user biological feature, and obtains a first result, wherein the second user biological feature is a biological feature that is registered on the server in advance by the terminal;
receiving, by the server, the first result sent by the terminal; and
determining, by the server according to the first result, whether the first user biological feature is authenticated.

11. The method according to claim 10, wherein before the receiving, by the server, the first result sent by the terminal, the method further comprises:
sending, by the server to the terminal, a biological feature authentication request that carries challenge text, so that after acquiring a first user private key according to the first user biological feature, and second-user-private-key ciphertext and a second-user-biological-feature secure sketch that are prestored on the terminal, the terminal performs signature processing on the challenge text according to the first user private key, to obtain a first signature, wherein the second-user-private-key ciphertext is an encrypted second user private key.

12. The method according to claim 11, wherein the receiving, by the server, the first result sent by the terminal specifically comprises:
receiving, by the server, the first signature and a second user public key that are sent by the terminal; and
the determining, by the server according to the first result, whether the first user biological feature is authenticated specifically comprises:
determining, by the server according to the second user public key and the first signature, whether the first user biological feature is authenticated.

13. The method according to claim 12, wherein before the configuring, by a server, a first-biological-feature processing instruction set for a terminal in advance, the method further comprises:
configuring, by the server, a second-biological-feature processing instruction set for the terminal;
receiving, by the server, a biological feature registration request sent by the terminal, wherein the biological feature registration request comprises a user identifier ID and a terminal ID;
sending, by the server, apparatus private key ciphertext and an apparatus public key to the terminal, so that after acquiring an apparatus private key by decrypting the apparatus private key ciphertext according to a user account password entered by a user, the terminal performs signature processing on the second user public key and the user ID according to the apparatus private key, to obtain a second signature;
receiving, by the server, the second signature sent by the terminal; and
determining, by the server according to the apparatus public key and the second signature, whether the second user biological feature is registered successfully.

14. The method according to claim 13, wherein the sending, by the server, apparatus private key ciphertext and an apparatus public key to the terminal specifically comprises:
generating, by the server, an apparatus public-private key pair, wherein the apparatus public-private key pair comprises the apparatus public key and the apparatus private key;
encrypting, by the server, the apparatus private key according to a hash value of the user account password, to generate the apparatus private key ciphertext; and
sending, by the server, the apparatus private key ciphertext and the apparatus public key to the terminal.

15. The method according to claim 12, wherein the determining, by the server according to the second user public key and the first signature, whether the first user biological feature is authenticated specifically comprises:
determining, by the server according to the second user public key, whether the first signature is the same as a third signature, wherein the third signature is obtained by the terminal by performing signature processing on the challenge text according to the second user private key.

16. A terminal, comprising:
an acquiring module, configured to determine, according to a preset first-biological-feature processing instruction set, whether a currently-entered first user biological feature matches a second user biological feature, to obtain a first result, wherein the first-biological-feature processing instruction set is configured by a server for the terminal, and the second user biological feature is a biological feature that is registered on the server in advance by the terminal;
a judgment module, configured to determine whether the first result is correct, wherein that the first result is correct comprises the following: when the terminal determines that the first user biological feature matches the second user biological feature and the first result does not carry the second user biological feature, it indicates that the first result is correct; and
a sending module, configured to: when the judgment module determines that the first result is correct, send the first result to the server, so that the server determines, according to the first result, whether the first user biological feature is authenticated.

17. The terminal according to claim 16, wherein the acquiring module comprises:
a first receiving unit, configured to receive a biological feature authentication request sent by the server, wherein the biological feature authentication request comprises challenge text that is randomly generated by the server;
a first acquiring unit, configured to acquire a first user private key according to the first user biological feature, prestored second-user-private-key ciphertext, and a prestored second-user-biological-feature secure sketch, wherein the second-user-private-key ciphertext is an encrypted second user private key; and
a second acquiring unit, configured to perform signature processing on the challenge text according to the first user private key, to obtain a first signature.

18. The terminal according to claim 17, wherein the judgment module is specifically configured to determine, according to a preset second user public key, whether the first signature is correct; and
the sending module is specifically configured to: when the judgment module determines that the first signature is correct, send the first signature and the second user public key to the server, so that the server determines, according to the second user public key and the first signature, whether the first user biological feature is authenticated.

19. The terminal according to claim 17, wherein the first acquiring unit is specifically configured to: acquire first-biological-feature code according to the second-user-biological-feature secure sketch and the first user biological feature, and decrypt the second-user-private-key ciphertext according to a hash value of the first-biological-feature code, to obtain the first user private key.

20. The terminal according to claim 18, wherein the judgment module is specifically configured to determine, according to the second user public key, whether the first signature is the same as a third signature, wherein the third signature is obtained by the terminal by performing signature processing on the challenge text according to the second user private key.

21. The terminal according to any one of claims 16 to 20, wherein the terminal further comprises:
a registration module, configured to: before the acquiring module determines, according to the preset first-biological-feature processing instruction set, whether the currently-entered first user biological feature matches the second user biological feature, to obtain the first result, register the second user biological feature on the server according to a preset second-biological-feature processing instruction set and the second user biological feature, wherein the second-biological-feature processing instruction set is configured by the server for the terminal.

22. The terminal according to claim 21, wherein the registration module comprises:
a generating unit, configured to generate a user public-private key pair, wherein the user public-private key pair comprises the second user private key and the second user public key;
a second receiving unit, configured to receive the second user biological feature entered by a user;
a third acquiring unit, configured to encrypt the second user private key according to a hash value of the second user biological feature, to acquire the second-user-private-key ciphertext and the second-user-biological-feature secure sketch; and
a saving unit, configured to save the second-user-private-key ciphertext and the second-user-biological-feature secure sketch.

23. The terminal according to claim 22, wherein the registration module further comprises:
a sending unit, configured to: before the generating unit generates the user public-private key pair, send a biological feature registration request to the server, wherein the biological feature registration request comprises a user identifier ID and a terminal ID;
a third receiving unit, configured to receive apparatus private key ciphertext and an apparatus public key that are sent by the server, wherein the apparatus private key ciphertext is an encrypted apparatus private key; and
a decryption unit, configured to decrypt the apparatus private key ciphertext according to a user account password entered by the user, to acquire the apparatus private key.

24. The terminal according to claim 23, wherein the registration module further comprises:
a fourth acquiring unit, configured to: after the saving unit saves the second-user-private-key ciphertext and the second-user-biological-feature secure sketch, perform signature processing on the second user public key and the user ID according to the apparatus private key, to obtain a second signature; and
a judgment unit, configured to determine, according to the apparatus public key, whether the second signature is correct; wherein
the sending unit is further configured to: when the judgment unit determines that the second signature is correct, send the second signature to the server, so that the server determines, according to the apparatus public key and the second signature, whether the second user biological feature is registered successfully.

25. A server, comprising:
a first configuring module, configured to configure a first-biological-feature processing instruction set for a terminal in advance, so that the terminal determines, according to the first-biological-feature processing instruction set, whether a first user biological feature that is currently entered at the terminal matches a second user biological feature, and obtains a first result, wherein the second user biological feature is a biological feature that is registered on the server in advance by the terminal;
a first receiving module, configured to receive the first result sent by the terminal; and
a first determining module, configured to determine, according to the first result, whether the first user biological feature is authenticated.

26. The server according to claim 25, wherein the server further comprises:
a first sending module, configured to send, to the terminal, a biological feature authentication request that carries challenge text, so that after acquiring a first user private key according to the first user biological feature, and second-user-private-key ciphertext and a second-user-biological-feature secure sketch that are prestored on the terminal, the terminal performs signature processing on the challenge text according to the first user private key, to obtain a first signature, wherein the second-user-private-key ciphertext is an encrypted second user private key.

27. The server according to claim 26, wherein the first receiving module is specifically configured to receive the first signature and a second user public key that are sent by the terminal; and
the first determining module is specifically configured to determine, according to the second user public key and the first signature, whether the first user biological feature is authenticated.

28. The server according to claim 27, wherein the server further comprises:
a second configuring module, configured to: before the first configuring module configures the first-biological-feature processing instruction set for the terminal, configure a second-biological-feature processing instruction set for the terminal;
a second receiving module, configured to receive a biological feature registration request sent by the terminal, wherein the biological feature registration request comprises a user identifier ID and a terminal ID;
a second sending module, configured to send apparatus private key ciphertext and an apparatus public key to the terminal, so that after acquiring an apparatus private key by decrypting the apparatus private key ciphertext according to a user account password entered by a user, the terminal performs signature processing on the second user public key and the user ID according to the apparatus private key, to obtain a second signature;
a third receiving module, configured to receive the second signature sent by the terminal; and
a second determining module, configured to determine, according to the apparatus public key and the second signature, whether the second user biological feature is registered successfully.

29. The server according to claim 28, wherein the second sending module comprises:
a first generating unit, configured to generate an apparatus public-private key pair, wherein the apparatus public-private key pair comprises the apparatus public key and the apparatus private key;
a second generating unit, configured to encrypt the apparatus private key according to a hash value of the user account password, to generate the apparatus private key ciphertext; and
a sending unit, configured to send the apparatus private key ciphertext and the apparatus public key to the terminal.

30. The server according to claim 27, wherein the first determining module is specifically configured to determine, according to the second user public key, whether the first signature is the same as a third signature, wherein the third signature is obtained by the terminal by performing signature processing on the challenge text according to the second user private key.
